# EUROPEAN PATENT APPLICATION

(11) **EP 4 704 020 A1**
(43) Date of publication of application: **04.03.2026**
(21) Application number: 24215386.4
(22) Date of filing: 26.11.2024
(51) Int. Cl.: G06Q 40/04

(54) **TRADING METHOD, TRADING BROKERAGE METHOD, TRADING BROKERAGE PROGRAM**

(30) Priority: 30.08.2024 JP 2024150235
(71) Applicant: FUJITSU LIMITED, Kawasaki-shi, Kanagawa 211-8588 (JP); Tokyo Stock Exchange, Inc., Chuo-ku, Tokyo 103-8220 (JP)
(72) Inventor: Kuwabara, Akihiro, Kawasaki-shi, Kanagawa, 211-8588 (JP); Tagawa, Noriyuki, Kawasaki-shi, Kanagawa, 211-8588 (JP); Okura, Yuki, Kawasaki-shi, Kanagawa, 211-8588 (JP); Tsuchiya, Koji, Kawasaki-shi, Kanagawa, 211-8588 (JP); Ito, Koichi, Kawasaki-shi, Kanagawa, 211-8588 (JP); Tokita, Risa, Kawasaki-shi, Kanagawa, 211-8588 (JP); Noguchi, Shota, Kawasaki-shi, Kanagawa, 211-8588 (JP); Ito, Saki, Kawasaki-shi, Kanagawa, 211-8588 (JP); Nishida, Takumi, Kawasaki-shi, Kanagawa, 211-8588 (JP); Tanioka, Kazuomi, Tokyo, 103-8220 (JP); Nakao, Kenta, Tokyo, 103-8220 (JP); Usui, Takahiro, Tokyo, 103-8220 (JP)
(74) Representative: Hoffmann Eitle

(57) **Abstract**

A brokerage system sends, upon receiving a first trade request requesting a trade of one side from buy and sell sides for a security and specifying a net price calculated as the sum of a gross price provided by a market maker and the commission of a securities company from an investor system of an investor side, order information for placing an order of the one side using the gross price and order information for placing an order of the one side using the net price to a securities company system of the securities company with which the investor has a securities account.

## Description

### FIELD

The embodiments discussed herein relate to a trading method, a trading brokerage method, and a trading brokerage program.

### BACKGROUND

Trading for securities including stocks, bonds, and others has increasingly been conducted electronically, and a variety of services for such electronic trading are offered. For example, trading brokerage services are available which provide enquiry and negotiation functions for securities trading between investors and market makers using request for quote (RFQ).

In addition, as another example of the electronic trading services, there is proposed a system that allows securities trades to be requested using terminals installed in stores such as convenience stores.

See, for example, Japanese Laid-open Patent Publication No. 2005-100052.

The above trading brokerage services allow the investor side to request trades at prices in gross pricing, which do not include the commissions of securities companies, but some of them do not allow the investor side to request trades at prices in net pricing, which include the commissions .

### SUMMARY

In one aspect, an object of the present disclosure is to provide a trading method, a trading brokerage method, and a trading brokerage program that enable securities trades to be requested using prices in net pricing.

According to one aspect, there is provided a trading method in a securities trading system including a brokerage system mediating securities trading between an investor and a market maker and a securities company system of a securities company with which the investor has a securities account. The trading method includes: sending, by the brokerage system, upon receiving a first trade request requesting a trade of one side from buy and sell sides for a security and specifying a net price calculated as a sum of a gross price provided by the market maker and a commission of the securities company from an investor system of the investor side, first order information for placing a first order of the one side using the gross price and second order information for placing a second order of the one side using the net price to the securities company system; performing, by the securities company system, order processing based on the received first order information; and generating, by the securities company system, third order information for placing a third order of another side from the buy and sell sides for the security, using the net price, based on the received second order information, and performing order processing based on the second order information and the third order information.

### BRIEF DESCRIPTION OF DRAWINGS

FIG. 1 illustrates an example of the configuration and processing of a securities trading system according to a first embodiment;
FIG. 2 illustrates an example of the overall configuration of a securities trading system according to a second embodiment;
FIG. 3 illustrates an example of the hardware configuration of a brokerage server;
FIG. 4 illustrates an example of a trading flow in the case of using a gross price;
FIG. 5 illustrates an example of a trading flow in the case of using a net price (part 1);
FIG. 6 illustrates the example of the trading flow in the case of using the net price (part 2);
FIG. 7 illustrates an example of the configuration of processing functions provided in a brokerage system and a securities company system of a securities company that an investor uses;
FIG. 8 illustrates an example of a screen display for registering a commission rate of a securities company in a brokerage service;
FIG. 9 illustrates an example of a screen display on which an investor specifies a pricing type;
FIG. 10 illustrates an example of a screen display on which a person in charge at a securities company that an investor uses confirms the contents of an order request;
FIG. 11 illustrates an example of order request message data that is sent from a brokerage system to the system of a securities company that an investor uses;
FIG. 12 is a sequence diagram illustrating an example of processing when a trade using a gross price is requested;
FIG. 13 is a sequence diagram illustrating an example of processing for executing the trade requested in FIG. 12;
FIG. 14 is a sequence diagram illustrating an example of processing when a trade using a net price is requested;
FIG. 15 is a sequence diagram illustrating an example of processing for executing the trade requested in FIG. 14 (part 1); and
FIG. 16 is a sequence diagram illustrating the example of the processing for executing the trade requested in FIG. 14 (part 2).

### DESCRIPTION OF EMBODIMENTS

Hereinafter, embodiments will be described with reference to the accompanying drawings.

### First Embodiment

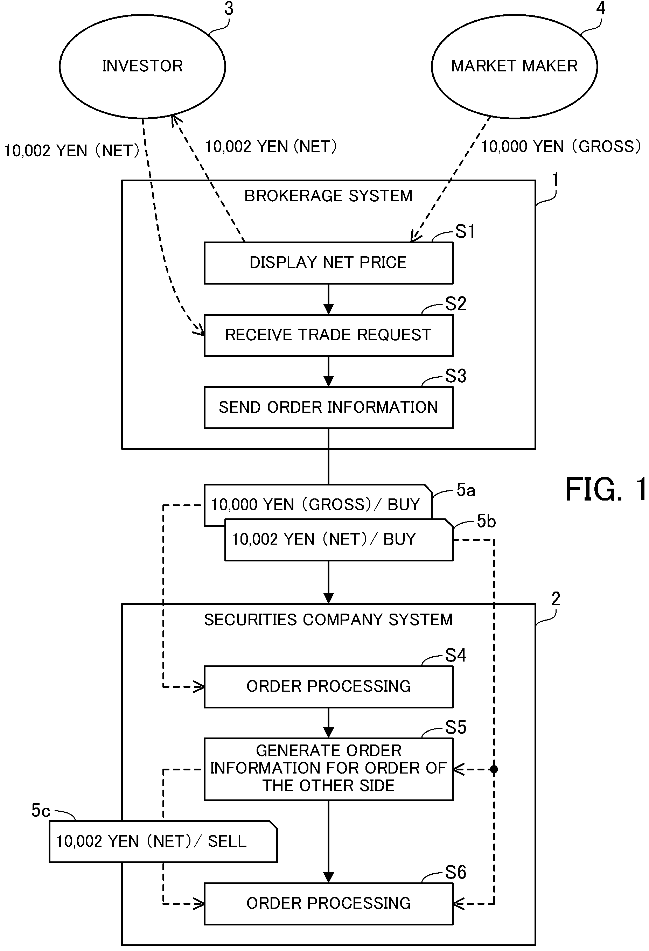

FIG. 1 illustrates an example of the configuration and processing of a securities trading system according to a first embodiment. The securities trading system illustrated in FIG. 1 includes a brokerage system 1 and a securities company system 2.

The brokerage system 1 mediates securities trading between an investor 3 and a market maker 4. For example, the brokerage system 1 makes enquiries and negotiations on the securities trading between them. As an example, the brokerage system 1 notifies the investor 3 of a quoted price provided by the market maker 4, and when receiving a trade request at the quoted price from the investor 3, sends an order request based on the trade request to the securities company system 2 or the like.

The securities company system 2 is the system of the securities company with which the investor 3 has a securities account. The securities company system 2 performs order processing on the trade on the basis of the order request received from the brokerage system 1. In this order processing, for example, the brokerage system 1 may request the execution of the trade from the order function of a securities exchange, which is different from the securities company system 2 and is not illustrated, if the securities company selects this.

The following describes a processing procedure in the case where the investor 3 makes a securities trade request with a price in net pricing (net price) specified, to the brokerage system 1. The net price here refers to a price that includes the commission of the securities company corresponding to the securities company system 2. On the other hand, a price in gross pricing (gross price) refers to a price that does not include the commission. In the following description, both the net price and the gross price indicate a price per unit of security. In addition, the following describes, as an example, the case where the investor 3 requests a trade of buy side from the buy and sell sides in securities trading.

For example, the brokerage system 1 receives a quoted price for a security to be traded, from the market maker 4. The brokerage system 1 then calculates a net price by adding a commission to the quoted price (gross price). Assume now, as an example, that the quoted price (gross price) is 10,000 yen and the commission rate is 0.02%. In this case, the net price is calculated to be 10,002 yen. In this connection, for example, the commission rate is stored in advance in association with the investor 3 and securities company (corresponding to the securities company system 2) in a storage device (not illustrated) included in the brokerage system 1.

The brokerage system 1 presents the investor 3 with the calculated net price (step S1) . In actual, the brokerage system 1 sends the net price to an information processing system (investor system, not illustrated) of the investor 3 side, so that the net price is displayed on a display device (not illustrated) of the investor system.

When the investor 3 makes an operation to request a trade at the presented net price (10,002 yen), the trade request with this net price specified is sent from the investor system. When receiving the trade request (step S2), the brokerage system 1 generates order information 5a and 5b on the basis of the trade request. The order information 5a is for placing a "buy" order using the gross price (10,000 yen). The order information 5b is for placing a "buy" order using the net price (10,002 yen). The brokerage system 1 sends the generated order information 5a and 5b to the securities company system 2 to request the placement of the orders specified by the order information 5a and 5b (step S3) .

When receiving the order information 5a and 5b from the brokerage system 1, the securities company system 2 performs the following processing. First, the securities company system 2 performs order processing on the basis of the received order information 5a (step S4). For example, the securities company system 2 sends the contents of the order information 5a to an information processing system (securities exchange system, not illustrated) of the securities exchange to place the order, so that the order is executed.

Then, the securities company system 2 generates order information 5c for placing an order of the other side (here, "sell") from the buy and sell sides, using the above-mentioned net price (10,002 yen) on the basis of the order information 5b (step S5). The securities company system 2 performs order processing on the basis of the order information 5b and 5c (step S6). That is, the security purchased based on the order information 5a is sold at the net price on the basis of the order information 5c and is then purchased at the net price on the basis of the order information 5b.

In this connection, the order processing of step S6 is performed after the execution of the order in the order processing of step S4 is complete. The generation of the order information 5c at step S5 may be performed either after or before the execution of the order in step S4 is complete.

In addition, in the order processing of step S6, the securities company system 2 may send the contents of each order information 5b and 5c to the securities exchange system to place the orders. Alternatively, the trade in the order processing of step S6 may be executed within the securities company corresponding to the securities company system 2.

The above description has described the case where the investor 3 requests a "buy" trade, as an example. Alternatively, the investor 3 is able to request a "sell" trade. In this case, the "sell" trade request is received at step S2, and order information 5a and 5b for "sell" is generated and sent at step S3. In addition, order information 5c for "buy" is generated at step S5.

With the above-described securities trading system according to the first embodiment, the investor 3 is able to make a securities trade request using a net price to the brokerage system 1. The brokerage system 1 having received this trade request generates the order information 5b corresponding to the trade at the net price agreed upon and sends the order information 5b to the securities company system 2. In addition, since the brokerage system 1 already has an agreement on the gross price with the market maker 4, the brokerage system 1 also generates the order information 5a corresponding to the trade at the gross price agreed upon and sends the order information 5a to the securities company system 2.

Therefore, using the order information 5a, the securities company system 2 is able to perform the order processing for the trade at the gross price agreed upon with the market maker 4 (step S4). In addition, using the order information 5b and the order information 5c based on the order information 5b, the securities company system 2 is able to perform the order processing for the trade at the net price requested by the investor 3 (step S6). As a result, even in the case where the investor 3 makes the trade request using the net price to the brokerage system 1, the above-described securities trading system is able to execute the trade between the investor 3 and the market maker 4 without any problems.

### Second Embodiment

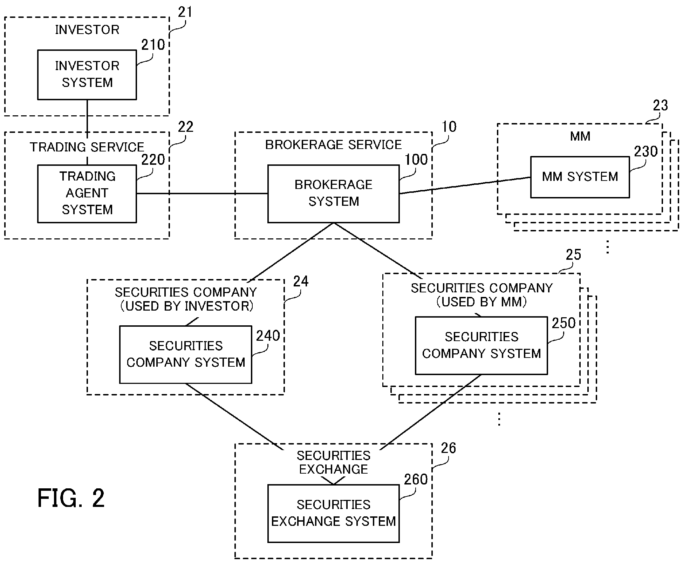

FIG. 2 illustrates an example of the overall configuration of a securities trading system according to a second embodiment. The securities trading system illustrated in FIG. 2 includes a brokerage system 100, an investor system 210, a trading agent system 220, a market maker (MM) system 230, securities company systems 240 and 250, and a securities exchange system 260. In this connection, the brokerage system 100 is an example of the brokerage system 1 of FIG. 1, and the securities company system 240 is an example of the securities company system 2 of FIG. 1.

The brokerage system 100 is a server system that is operated by a brokerage entity providing a brokerage service 10 for securities trading. The brokerage service 10 is designed to mediate enquiries and negotiations for securities trading between an investor 21 and a market maker 23 using request for quote (RFQ), and may be referred to as an "RFQ platform". The brokerage service 10 receives an RFQ specifying an issue and quantity (the number of units or the amount) of a security desired to be traded from the investor 21, and sends the RFQ to a plurality of market makers 23. The brokerage service 10 presents the investor 21 side with the best price among the prices provided by the market makers 23, so as to allow the investor 21 to trade the desired security.

In this connection, one example of securities (financial products) to be traded is exchange traded funds (ETFs). In this case, the investor 21 that becomes a user of the brokerage service 10 is an institutional investor such as a financial institution or an insurance company.

The investor system 210 is a computer system of the investor 21 using the brokerage service 10. For example, the investor system 210 includes a terminal device that is operated by an operator, for example. In the case where the investor 21 is an institutional investor (cooperation or organization), the investor system 210 may include a server computer.

The trading agent system 220 is a server system that is operated by a trading agent providing a trading service 22 for securities. For example, the trading service 22 displays a graphical user interface (GUI) screen on the terminal device of the investor system 210, and performs securities trade processing in accordance with operations made on the GUI screen by the operator of the investor 21 side. In the present embodiment, the trading agent system 220 is designed to display a GUI screen for creating an RFQ on the terminal device of the investor system 210, to create the RFQ on the basis of information entered on the GUI screen, and to send the RFQ to the brokerage system 100.

In this connection, the investor 21 is able to use the brokerage service 10 directly, without using the trading service 22.

The market maker system 230 is a server system that is operated by the market maker 23. The market maker 23 is a financial company that provides quoted bid and ask prices for market making. There are a plurality of market makers 23, and the market maker system 230 of each market maker 23 is connected to the brokerage system 100.

The securities company system 240 is a server system that is operated by the securities company 24 that the investor 21 uses (more specifically, the securities company 24 with which the investor 21 has a securities account). The securities company system 240 is able to receive a trade request from the investor 21 via the brokerage system 100 and execute the trade.

The securities company system 250 is a server system that is operated by the securities company 25 that the market maker 23 uses (more specifically, the securities company 25 with which the market maker 23 has a securities account). The securities company system 250 is able to receive a request for a trade upon which the market maker 23 has agreed with the investor 21, via the brokerage system 100 and execute the trade.

In this connection, the plurality of market makers 23 exist as noted above, and there are securities company systems 250 respectively for securities companies 25 that the market makers 23 use. Since some market makers 23 may use the same securities company 25, one or more securities company systems 250 may actually be connected to the brokerage system 100.

The securities exchange system 260 is a server system that is operated by a securities exchange 26 that executes securities trading on the basis of orders received from the securities companies 24 and 25. For example, the securities exchange system 260 provides an electronic trading service for off-auction trading.

The following describes an example of a computer included in the securities trading system.

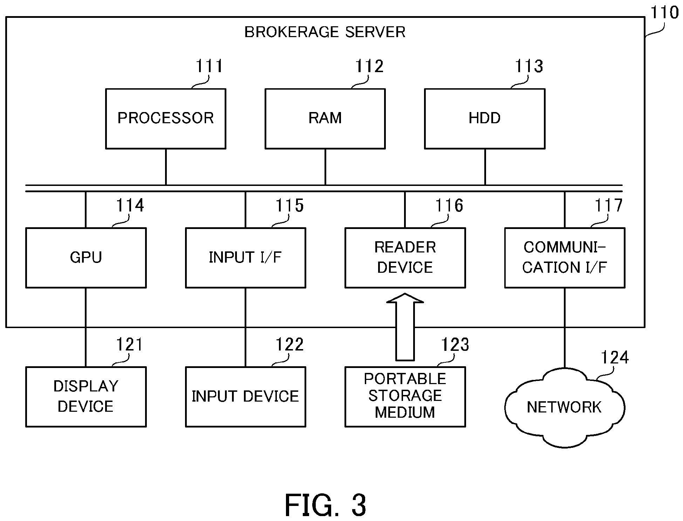

FIG. 3 illustrates an example of the hardware configuration of a brokerage server. The brokerage server 110 is an example of a server computer included in the brokerage system 100. This brokerage server 110 includes a processor 111, a random access memory (RAM) 112, a hard disk drive (HDD) 113, a graphics processing unit (GPU) 114, an input interface (I/F) 115, a reader device 116, and a communication interface (I/F) 117.

The processor 111 centrally controls the entire brokerage server 110. For example, the processor 111 is a central processing unit (CPU), a micro processing unit (MPU), a digital signal processor (DSP), an application specific integrated circuit (ASIC), or a programmable logic device (PLD). The processor 111 may be a combination of two or more units selected from the CPU, MPU, DSP, ASIC, and PLD.

In this connection, the brokerage server 110 may be provided with a plurality of processors 111. Different processors may perform different ones of a plurality of processes performed by the brokerage server 110. The processor 111 may be referred to as processor circuitry.

The RAM 112 is used as a main memory of the brokerage server 110. The RAM 112 temporarily stores at least part of operating system (OS) programs and application programs being executed by the processor 111. In addition, the RAM 112 stores various kinds of data being used by the processor 111 in processing.

The HDD 113 is used as a secondary storage device of the brokerage server 110. The HDD 113 stores OS programs, application programs, and various kinds of data. In this connection, as the secondary storage device, another type of non-volatile storage device such as a solid-state drive (SSD) may be used.

A display device 121 is connected to the GPU 114. The GPU 114 displays images on the display device 121 in accordance with commands from the processor 111. As the display device 121, a liquid crystal display or an organic electro-luminescence (EL) display may be used.

An input device 122 is connected to the input interface 115. The input interface 115 sends signals output from the input device 122 to the processor 111. The input device 122 may be a keyboard, a pointing device, or another. Pointing devices include a mouse, a touch panel, a tablet, a touch pad, a track ball, and others.

A portable storage medium 123 is attached to and detached from the reader device 116. The reader device 116 reads data from the portable storage medium 123 and sends the data to the processor 111. The portable storage medium 123 may be an optical disc, a semiconductor memory, or another.

The communication interface 117 communicates data with other apparatuses over a network 124.

The brokerage server 110 with the above-described hardware configuration is able to its processing functions. In this connection, the brokerage system 100 may include a plurality of computers with the configuration illustrated in FIG. 3. Moreover, each of the investor system 210, trading agent system 220, market maker system 230, securities company systems 240 and 250, and securities exchange system 260 may also include one or more computers with the configuration illustrated in FIG. 3.

By the way, the above-described securities trading system enables the investor 21 to use either a price in gross pricing (gross price) or a price in net pricing (net price) when the investor 21 requests a securities trade from the brokerage service 10. The gross price includes only the price of a security, whereas the net price is the sum of the gross price and the commission of the securities company 24.

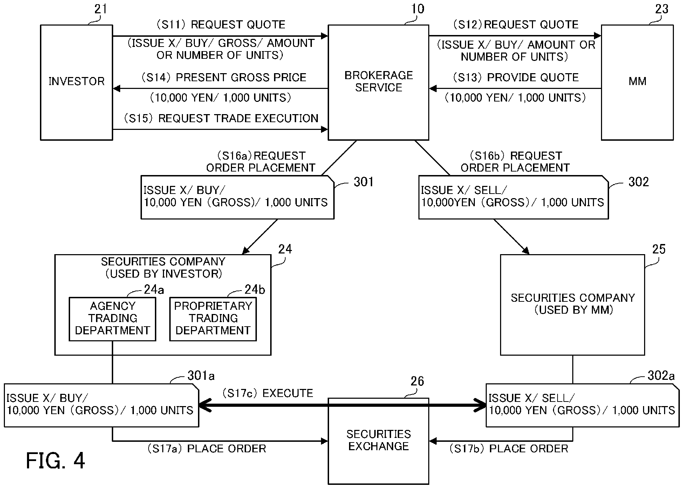

The following describes examples of a trading flow in the securities trading system with reference to FIGS. 4 to 6. As an example, the following describes the case where the investor 21 requests a "buy" trade for a security.

FIG. 4 illustrates an example of a trading flow in the case of using a gross price.

The investor 21 requests an ask price quote for a security of a certain issue (hereinafter, "issue X") from the brokerage service 10 (step S11). At this time, an RFQ specifying "buy" as an order type, "gross" as a pricing type, and the amount or the number of units desired for the buy trade is created and sent to the brokerage service 10.

The brokerage service 10 transfers the RFQ to the plurality of market makers 23 to request the ask price quote (step S12). Each market maker 23 provides the brokerage service 10 with a quoted ask price (limit price) (step S13). The brokerage service 10 then selects the best (here, lowest) quoted ask price from the provided quoted ask prices. It is assumed in the example of FIG. 4 that the quoted ask price of 10,000 yen per unit for 1,000 units, provided by a certain market maker 23, is selected as the best quoted ask price. In this case, the brokerage service 10 presents the investor 21 with the selected quoted ask price as it is (that is, in gross pricing) (step S14).

Assume now that the investor 21 requests the brokerage service 10 to execute a trade at the above quoted ask price (step S15). The brokerage service 10 then generates order information 301 for placing a buy order for 1,000 units of the issue X at the gross price of 10,000 yen. The brokerage service 10 passes order request information including the generated order information 301 to the securities company 24 that the investor 21 uses, to request the placement of the order (step S16a). At the same time, the brokerage service 10 generates order information 302 for placing a sell order for 1,000 units of the issue X at the gross price of 10,000 yen. The brokerage service 10 passes order request information including the generated order information 302 to the securities company 25 that the market maker 23 uses, to request the placement of the order (step S16b) .

When receiving the order request information including the order information 301, the securities company 24 generates order information 301a for placing the buy order for 1,000 units of the issue X at the gross price of 10,000 yen, on the basis of the order request information. The securities company 24 passes the generated order information 301a to the securities exchange 26 to place the order (step S17a).

In this connection, the securities company 24 includes an agency trading department 24a and a proprietary trading department 24b. The agency trading department 24a conducts trading using the funds entrusted by customers, whereas the proprietary trading department 24b conducts trading using the own funds of the securities company 24. In the case where a trade is requested using a gross price, as illustrated in FIG. 4, the agency trading department 24a places an order based on the order information 301a using the funds entrusted by the investor 21.

On the other hand, when receiving the order request information including the order information 302, the securities company 25 generates order information 302a for placing the sell order for 1,000 units of the security X at the gross price of 10,000 yen, on the basis of the order request information. The securities company 25 passes the generated order information 302a to the securities exchange 26 to place the order (step S17b).

The securities exchange 26 executes the buy and sell orders based on the order information 301a and 302a, thereby trading the security (step S17c).

As described above, in the case where the trade using the gross price is requested by the investor 21, the brokerage service 10 only needs to send the order information 301 for placing a buy order at the gross price and the order information 302 for placing a sell order at the gross price to the securities companies 24 and 25, respectively. By doing so, the trade using the gross price is executed between the investor 21 and the market maker 23.

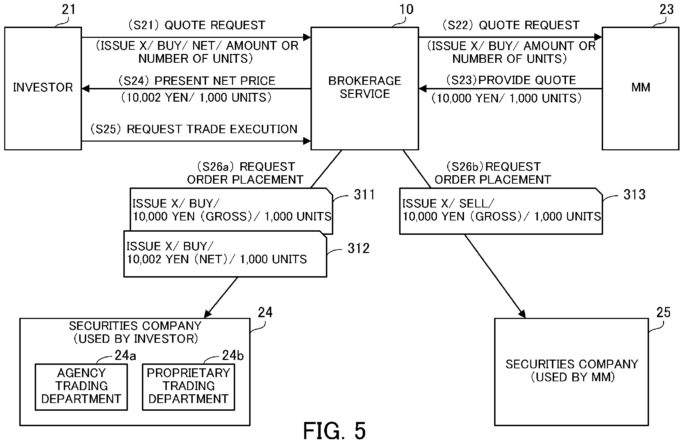

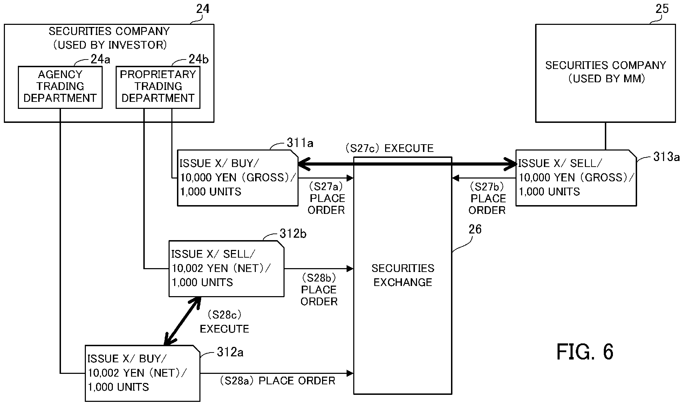

FIGS. 5 and 6 illustrate an example of a trading flow in the case of using a net price.

The investor 21 requests an ask price quote for a security of an issue X from the brokerage service 10 (step S21). At this time, an RFQ specifying "buy" as an order type, "net" as a pricing type, and the amount or the number of units desired for the buy trade is created and sent to the brokerage service 10.

The brokerage service 10 transfers the RFQ to the plurality of market makers 23 to request the ask price quote (step S22). Each market maker 23 provides the brokerage service 10 with a quoted ask price (limit price) (step S23). The brokerage service 10 then selects the best (here, lowest) quoted ask price from the provided quoted ask prices. It is assumed in the example of FIG. 5 that the quoted ask price of 10,000 yen per unit for 1,000 units, provided by a certain market maker 23, is selected as the best quoted ask price.

The brokerage service 10 adds the commission of the securities company 24 to the selected quoted ask price to thereby calculate a net price. Assume here that the commission rate is 0.02%, for example. In this case, the net price is calculated to be 10,002 yen. In this connection, the commission rate is registered in advance in association with the investor 21 and securities company 24 in the brokerage service 10. The brokerage service 10 presents the investor 21 with the calculated net price of 10,002 yen (step S24).

Assume now that the investor 21 requests the brokerage service 10 to execute a trade at the above net price (step S25). In this case, the brokerage service 10 generates order information 311 for placing a buy order for 1,000 units of the issue X at the gross price of 10,000 yen and order information 312 for placing a buy order for 1,000 units of the issue X at the net price of 10,002 yen. The brokerage service 10 passes order request information including the order information 311 and order request information including the order information 312 to the securities company 24 that the investor 21 uses, to request the placement of the orders (step S26a) . In this connection, the former order request information is a request that is destined to the proprietary trading department 24b via the agency trading department 24a of the securities company 24 for handling, and the latter order request information is a request that is destined to the agency trading department 24a of the securities company 24 for handling.

At the same time, the brokerage service 10 also generates order information 313 for placing a sell order for 1,000 units of the issue X at the gross price of 10,000 yen. The brokerage service 10 passes order request information including the generated order information 313 to the securities company 25 that the market maker 23 uses, to request the placement of the order (step S26b).

In the securities company 24, the agency trading department 24a receives the order request information including the order information 311 and the order request information including the order information 312. The agency trading department 24a first generates order information 311a for placing the buy order for 1,000 units of the issue X at the gross price of 10,000 yen, on the basis of the order request information including the order information 311. The agency trading department 24a passes the generated order information 311a to the proprietary trading department 24b to request the placement of the order. The proprietary trading department 24b passes the order information 311a to the securities exchange 26 to place the order (step S27a).

On the other hand, when the securities company 25 receives the order request information including the order information 313, the securities company 25 generates order information 313a for placing the sell order for 1,000 units of the issue X at the gross price of 10,000 yen, on the basis of the order request information. The securities company 25 passes the generated order information 313a to the securities exchange 26 to place the order (step S27b).

The securities exchange 26 executes the buy and sell orders based on the order information 311a and 313a, thereby trading the security (step S27c). In this trade, the security of the issue X is purchased using the own funds of the securities company 24.

Then, the agency trading department 24a of the securities company 24 generates order information 312b for placing a sell order for 1,000 units of the issue X at the net price of 10,002 yen, on the basis of the order request information including the order information 312. This order information 312b is for placing an order specifying a sell or buy side (order type) opposite to the side of order information 312a to be described later. The agency trading department 24a passes the generated order information 312b to the proprietary trading department 24b to request the placement of the order.

In addition, the agency trading department 24a of securities company 24 generates the order information 312a for placing the buy order for 1,000 units of the issue X at the net price of 10,002 yen, on the basis of the order request information including the order information 312. The agency trading department 24a passes the generated order information 312a to the securities exchange 26 to place the order (step S28a) . At the same time, the proprietary trading department 24b passes the order information 312b to the securities exchange 26 to place the order (step S28b). As a result, the cross-trade is executed between the agency trading department 24a and the proprietary trading department 24b, thereby trading the security (step S28c) .

At steps S28a to S28c, the trade may be executed between the agency trading department 24a and the proprietary trading department 24b without using the securities exchange 26. For example, the trade may be executed using the proprietary trading system (PTS) or on the over-the-counter (OTC) market. In addition, the processing of the securities company 24 illustrated in FIG. 6 is merely an example.

At step S25, where the investor 21 requests the execution of the trade using the net price, the brokerage service 10 has agreed on the net price with the investor 21 and on the gross price with the market maker 23. At this time, the brokerage service 10 generates the order information 311 and 313 for the trade at the gross price agreed upon, and sends the order information 311 and 313 to the securities companies 24 and 25, respectively. At the same time, the brokerage service 10 generates the order information 312 for the trade at the net price agreed upon, and sends the order information 312 to the securities company 24.

Between the securities companies 24 and 25, their buy and sell orders at the gross price are first executed using the order information 311a and 313a generated respectively based on the order information 311 and 313 (steps S27a and S27b) . As a result, the securities company 25 side completes the "sell" order requested by the market maker 4, as in the case illustrated in FIG. 4. The securities company 24 side, on the other hand, is temporarily in a state of completing the "buy" order using the gross price. Then, the securities company 24 performs order processing to execute the buy and sell orders at the net price, using the order information 312a and 312b based on the order information 312 (steps S28a and S28b) .

With the above procedure, even in the case where the investor 21 makes a trade request using the net price to the brokerage service 10, the securities trading system of the present embodiment is able to execute the trade between the investor 21 and the market maker 23 without any problems.

Through the processes of FIGS. 4 to 6, the investor 21 is able to make a trade request using either the gross price or the net price to the brokerage service 10. The brokerage service 10, on the other hand, is able to send the securities companies 24 and 25 order request information needed to ensure that the trade between the investor 21 and the market maker 23 is executed without any problems, regardless of whether the investor 21 has requested the trade at the gross price or the net price.

The following describes in detail the processing of how the securities trading system operates to execute the trades illustrated in FIGS. 4 to 6.

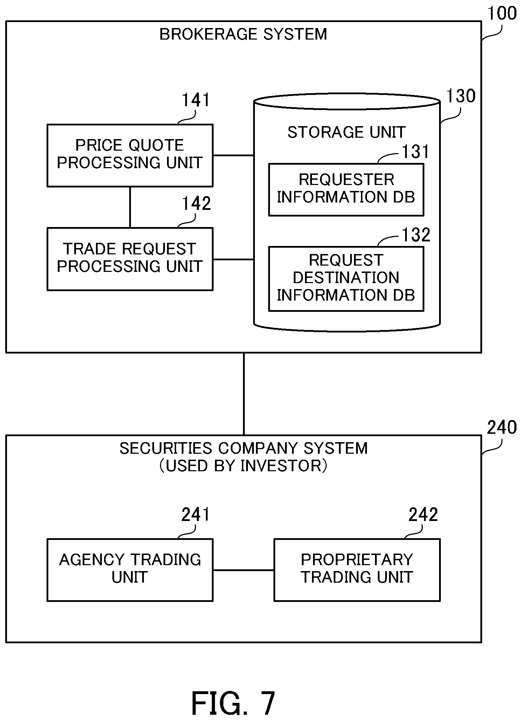

FIG. 7 illustrates an example of the configuration of processing functions provided in the brokerage system and the securities company system of the securities company that the investor uses.

The brokerage system 100 includes a storage unit 130, a price quote processing unit 141, and a trade request processing unit 142.

The storage unit 130 is a storage space kept in a storage device included in the brokerage system 100. The storage unit 130 stores a requester information database (DB) 131 and a request destination information database (DB) 132. The requester information database 131 contains information on the investor 21 that uses the brokerage service 10 and information on the securities company 24 that the investor 21 uses. This requester information database 131 also contains a commission rate in association with the investor 21 and securities company 24. The request destination information database 132 contains information on the market makers 23 that are the destinations of price quote requests and information on the securities companies 25 that the market makers 23 use.

The processing of the price quote processing unit 141 and trade request processing unit 142 is implemented by, for example, a processor (e.g., the processor 111 illustrated in FIG. 3) of a server computer included in the brokerage system 100 performing predetermined processes. The processing of the price quote processing unit 141 and the processing of the trade request processing unit 142 may be performed by different server computers.

When the price quote processing unit 141 receives an RFQ from the investor 21 side, the price quote processing unit 141 forwards the RFQ to the market maker systems 230 of the plurality of market makers 23 to request a price quote. The price quote processing unit 141 selects the best quoted price from the quoted prices provided by the market makers 23 and presents the investor 21 side with the selected quoted price.

When receiving a request for a trade at the presented quoted price from the investor 21 side, the trade request processing unit 142 sends order requests to the securities company system 240 corresponding to the investor 21 and the securities company system 250 corresponding to the market maker 23. By doing so, the trade request processing unit 142 causes the requested trade to be executed.

The securities company system 240 includes an agency trading unit 241 and a proprietary trading unit 242. The processing of the agency trading unit 241 and proprietary trading unit 242 is implemented by, for example, a processor of a server computer included in the securities company system 240 performing predetermined processes. The processing of the agency trading unit 241 and the processing of the proprietary trading unit 242 may be performed by different server computers.

The agency trading unit 241 performs processing for the agency trading department 24a. The proprietary trading unit 242 performs processing for the proprietary trading department 24b.

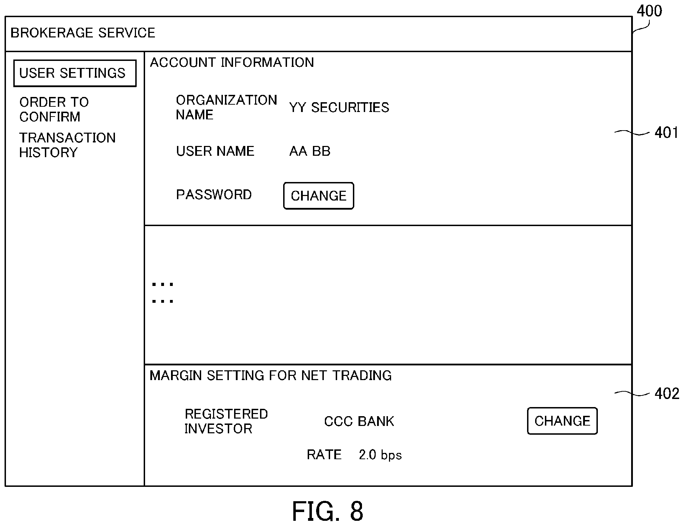

FIG. 8 illustrates an example of a screen display for registering the commission rate of a securities company in the brokerage service. The screen 400 illustrated in FIG. 8 is a user settings screen that is displayed on the display device of the securities company system 240 by the brokerage system 100, and includes setting areas 401 and 402.

The setting area 401 is for setting account information for the securities company 24 to use the brokerage service 10. Referring to the example in FIG. 8, the setting area 401 includes "YY Securities" that is the name of the securities company 24 as an organization name and "AA BB" that is the name of a person in charge at the securities company 24 as a user name.

The setting area 402 is for setting a commission rate to be used when a trade is requested using a net price. Referring to the example in FIG. 8, "CCC Bank" that is the name of the investor 21 is set as a registered investor, and a commission rate of "2.0 bps" (0.02%, bps: basis points) is set as a commission rate to be used for this investor 21.

When the person in charge at the securities company 24 enters and sets the commission rate in the setting area 402, the set commission rate is sent to the brokerage system 100. As a result, the commission rate is registered in association with the investor 21 and securities company 24 in the requester information database 131.

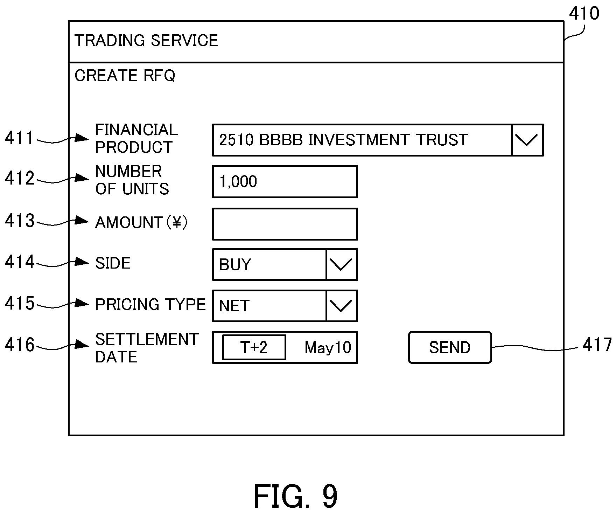

FIG. 9 illustrates an example of a screen display on which an investor specifies a pricing type. The screen 410 illustrated in FIG. 9 is an input screen for the investor 21 to create an RFQ. As an example, the screen 410 is displayed on the display device of the investor system 210 by the trading agent system 220. This screen 410 includes setting areas 411 to 416 and a send button 417.

The setting area 411 is for setting the name of a financial product to be traded. The setting area 412 is for setting the number of units to be requested for the trade. The setting area 413 is for setting an amount for the trade. When an RFQ is created, a value is set in only either the setting area 412 or 413. The setting area 414 is for setting a side (order type) indicating "buy" or "sell". The setting area 415 is for setting a pricing type indicating net or gross. The setting area 416 is for setting a settlement date and time. When the send button 417 is pressed, an RFQ including the information set on the screen 410 is sent to the trading agent system 220. The trading agent system 220 receives this RFQ and forwards the RFQ to the brokerage system 100.

In this connection, after the send button 417 is pressed, the best quoted price among the quoted prices provided by the market makers 23 may be displayed on the screen 410.

In addition, the investor 21 is able to use the brokerage service 10 directly, without using the trading service 22. In this case, the investor system 210 is directly connected to the brokerage system 100. In this environment, a screen similar to that of FIG. 9 may be displayed on the display device of the investor system 210 by the brokerage system 100, and an RFQ including a value set as the pricing type may be sent from the investor system 210 to the brokerage system 100.

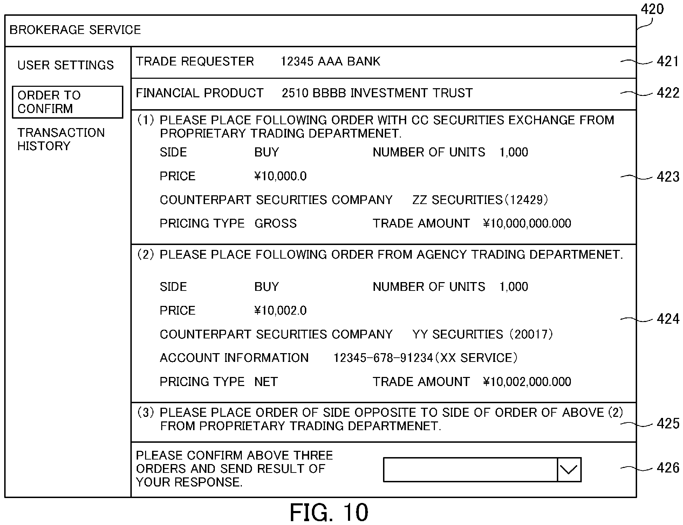

FIG. 10 illustrates an example of a screen display on which a person in charge at a securities company that an investor uses confirms the contents of an order request. When the investor 21 side requests the execution of a trade from the brokerage service 10 (step S15 or step S25), order request information is sent from the brokerage service 10 to the securities company 24 (step S16a or step S26a). At this time, a report indicating that the order request information has been sent is given from the brokerage system 100 to the securities company system 240. A person in charge at the agency trading department 24a of the securities company 24 accesses the brokerage system 100 from the securities company system 240 and displays a screen 420, as illustrated in FIG. 10, on the display device of the securities company system 240, so that the person in charge is able to check the contents of the order request information.

In the case where the execution of a trade using a net price is requested by the investor 21 side, the order request information including the order information 311 and the order request information including the order information 312 are sent from the brokerage system 100 to the securities company system 240. The screen 420 illustrated in FIG. 10 is a screen that is displayed in this case. This screen 420 includes display areas 421 to 426.

The display area 421 displays the name of the investor 21 requesting the trade. The display area 422 displays the name of a financial product to be traded. The display area 423 displays the contents of the order information 311 using the gross price, and the display area 424 displays the contents of the order information 312 using the net price. The display area 425 displays information instructing to generate the order information 312b based on the contents of the order information 312 displayed in the display area 424 and to perform order processing. The display area 426 is for entering a result of the order processing based on the order information 311 and 312.

In the case where the execution of a trade using a gross price is requested by the investor 21 side, on the other hand, the screen 420 includes a display area that displays the contents of the order information 301, in place of the display areas 423 to 425.

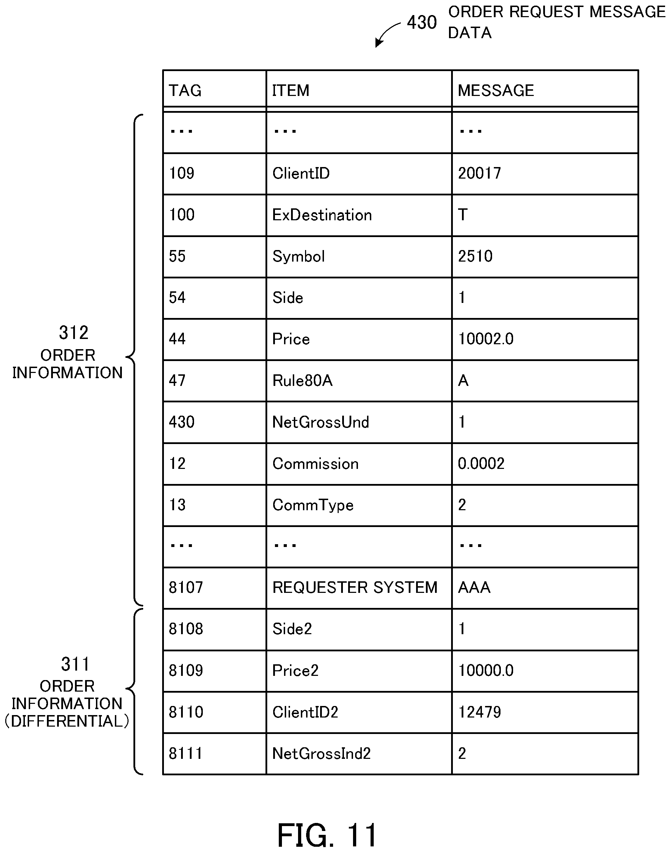

FIG. 11 illustrates an example of order request message data that is sent from the brokerage system to the system of the securities company that the investor uses. The order request message data 430 illustrated in FIG. 11 has an example of a data structure for order request information that is sent from the brokerage system 100 to the securities company system 240. This order request message data 430 is used when the execution of a trade using a net price is requested, and contains the contents of the order information 311 and 312.

In the order request message data 430 in FIG. 11, the data of tags "109", "100", "55", "54", "44", "47", "430", "12", "13", and "8107" corresponds to the contents of the order information 312. In addition, the data of tags "8108" to "8111" corresponds to the differential contents of the order information 311 from the order information 312.

The tag "109" is set with the identification code of a securities company (i.e., the securities company 24) that is the destination of an order request. The tag "100" is set with an identification code specifying a securities exchange. The tag "55" is set with the identification code of an issue to be traded. The tag "54" is set with an order type. For example, the tag "54" is set with "1" indicating a buy side or "2" indicating a sell side.

The tag "44" is set with an ordered price. In this example, the tag "44" is set with a net price. The tag "47" is set with identification information indicating whether to request the order from the agency trading department 24a or the proprietary trading department 24b. For example, the tag "47" is set with "A" indicating the agency trading department 24a and "P" indicating the proprietary trading department 24b.

The tag "430" is set with a pricing type for the order information 312. For example, the tag "430" is set with "1" indicating a net price or "2" indicating a gross price. The tag "12" is set with the commission rate of the securities company 24. The tag "13" is set with identification information identifying the unit of the tag "12".

The tag "8107" is set with the name of a trade requester. For example, in the case where the investor 21 requests the execution of the trade from the brokerage service 10 via the trading service 22, the tag "8107" is set with the name of the trading service 22. In the case where the investor 21 directly requests the execution of the trade from the brokerage service 10, the tag "8107" is set with the name of the investor 21.

The tag "8108" is set with an order type for the order information 311. The tag "8109" is set with a price for the order information 311. In this example, the tag "8109" is set with a gross price. The tag "8110" is set with the identification code of the securities company 25. The tag "8111" is set with a pricing type.

In this connection, in the case where the tag "430" is set with information indicating a gross price, the tags "12", "13", and "8108" to "8111" are not set in the order request message data 430. In this case, the remaining information describes the contents of the order information 301, and the tag "44" is set with the gross price.

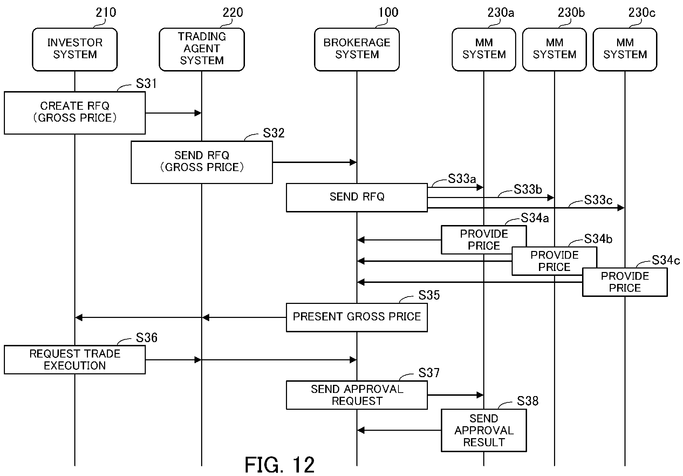

The following describes processing flows of the securities trading system for executing a trade, with reference to the sequence diagrams of FIGS. 12 to 16. In FIGS. 12 to 16, it is assumed, as an example, that the market maker systems 230a to 230c of three market makers are destinations of an RFQ.

FIG. 12 is a sequence diagram illustrating an example of processing when a trade using a gross price is requested.

The investor system 210 creates an RFQ (step S31). The RFQ specifies an order type of "buy", a pricing type of "gross", and the amount or the number of units desired for the buy trade. The RFQ is sent to the brokerage system 100 via the trading agent system 220 (step S32).

The price quote processing unit 141 of the brokerage system 100 sends the received RFQ to the market maker systems 230a to 230c (step S33a to S33c). Each market maker system 230a to 230c provides the brokerage system 100 with a price (quoted ask price) (steps S34a to S34c). The price quote processing unit 141 of the brokerage system 100 selects the best (here, lowest) price from the provided prices and sends the selected price to the investor system 210 via the trading agent system 220 (step S35). Assume here, as an example, that the price provided by the market maker system 230a is selected. The sent price is displayed on the display device of the investor system 210. By doing so, the investor 21 is presented with the best gross price.

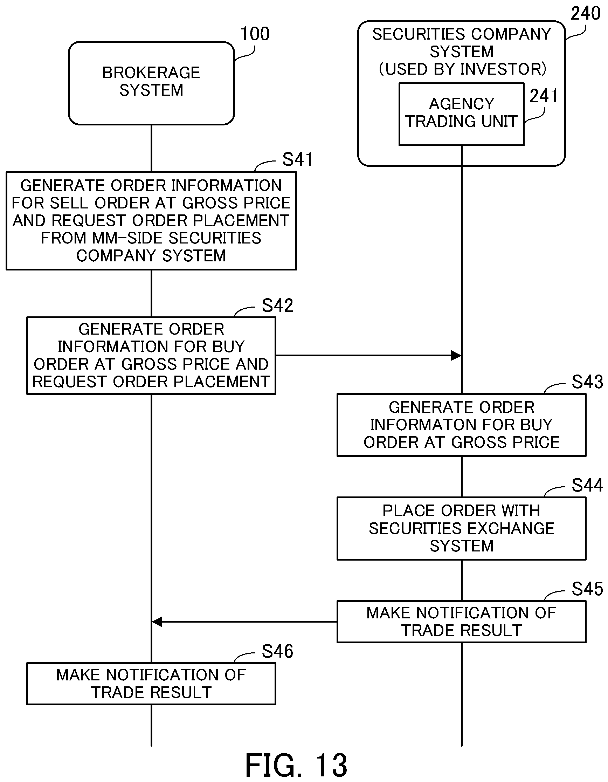

The investor system 210 requests the execution of a trade using the presented gross price in accordance with an input operation by a person in charge (step S36). The trade execution request is sent to the brokerage system 100 via the trading agent system 220. The price quote processing unit 141 of the brokerage system 100 sends an approval request for the trade at the presented price to the market maker system 230a (step S37). The market maker system 230a notifies the brokerage system 100 of a response to the approval request (step S38). Assume here that the brokerage system 100 is notified of a response of approval. In this case, the processing proceeds to the processing of FIG. 13.

FIG. 13 is a sequence diagram illustrating an example of processing for executing the trade requested in FIG. 12.

The trade request processing unit 142 of the brokerage system 100 generates order information 302 for placing a sell order at the gross price. The trade request processing unit 142 sends order request information including the generated order information 302 to the securities company system 250 corresponding to the market maker system 230a (step S41).

In addition, the trade request processing unit 142 generates order information 301 for placing a buy order at the gross price. The trade request processing unit 142 sends order request information including the generated order information 301 to the securities company system 240 corresponding to the investor 21 (step S42). In this connection, steps S41 and S42 may be executed in reverse order.

The agency trading unit 241 of the securities company system 240 generates order information 301a for placing the buy order at the gross price, on the basis of the received order request information (step S43). The agency trading unit 241 sends the generated order information 301a to the securities exchange system 260 to place the order (step S44) . On the other hand, the securities company system 250 generates order information 302a for placing the sell order at the gross price, on the basis of the order request information sent at step S41, and sends the generated order information 302a to the securities exchange system 260. The securities exchange system 260 executes the buy and sell orders based on the order information 301a and 302a. When the security is traded, the execution of this trade is reported to the securities company systems 240 and 250.

The agency trading unit 241 of the securities company system 240 notifies the brokerage system 100 of the trade result (step S45). The trade request processing unit 142 of the brokerage system 100 notifies the investor system 210 of the received trade result via the trading agent system 220 (step S46) .

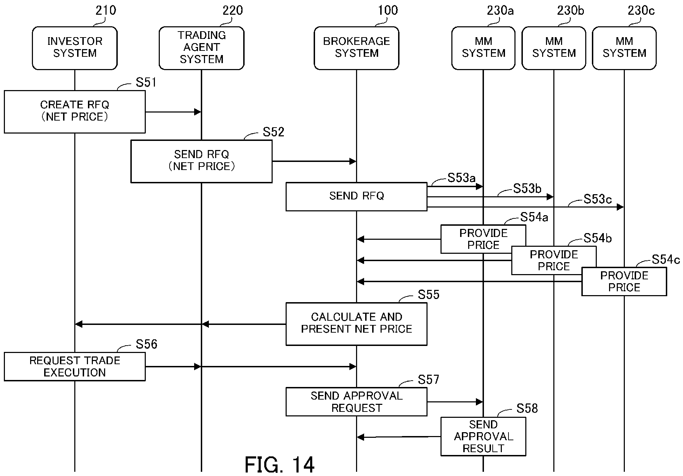

FIG. 14 is a sequence diagram illustrating an example of processing when a trade using a net price is requested.

The investor system 210 creates an RFQ (step S51) . The RFQ specifies an order type of "buy", a pricing type of "net", and the amount or the number of units desired for the buy trade. The RFQ is sent to the brokerage system 100 via the trading agent system 220 (step S52).

The price quote processing unit 141 of the brokerage system 100 sends the received RFQ to the market maker systems 230a to 230c (step S53a to S53c). In this connection, in the case where the RFQ specifies a price desired for the buy trade, the price quote processing unit 141 calculates a price by subtracting the commission of the securities company 24 from the price, and sends the RFQ with the original price updated to the calculated price to the market maker systems 230a to 230c.

Each market maker system 230a to 230c provides the brokerage system 100 with a price (quoted ask price) (steps S54a to S54c). The price quote processing unit 141 of the brokerage system 100 selects the best (here, lowest) price from the provided prices. Assume here, as an example, that the price provided by the market maker system 230a is selected. In addition, the price quote processing unit 141 obtains the commission rate corresponding to the investor 21 and securities company 24 from the requester information database 131. The price quote processing unit 141 adds the commission calculated based on the commission rate to the selected best price to thereby calculate a net price, and sends the calculated net price to the investor system 210 via the trading agent system 220 (step S55). The sent net price is displayed on the display device of the investor system 210. Thereby, the investor 21 is presented with the best net price.

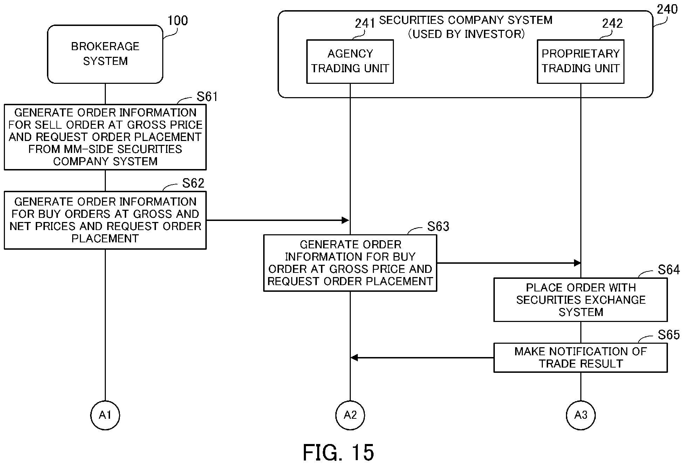

The investor system 210 requests the execution of a trade using the presented net price in accordance with an input operation by a person in charge (step S56). The trade execution request is sent to the brokerage system 100 via the trading agent system 220. The price quote processing unit 141 of the brokerage system 100 sends an approval request for the trade at the presented price to the market maker system 230a (step S57). The market maker system 230a notifies the brokerage system 100 of a response to the approval request (step S58). Assume here that the brokerage system 100 is notified of a response of approval. In this case, the processing proceeds to the processing of FIG. 15.

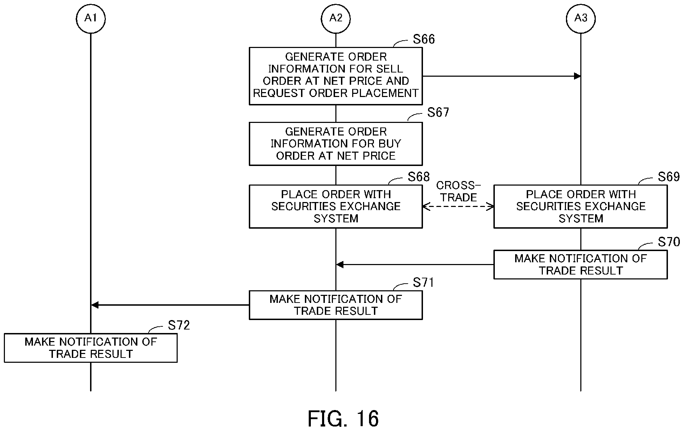

FIGS. 15 and 16 are sequence diagrams illustrating an example of processing for executing the trade requested in FIG. 14.

The trade request processing unit 142 of the brokerage system 100 generates order information 313 for placing a sell order at the gross price. The trade request processing unit 142 sends order request information including the generated order information 313 to the securities company system 250 corresponding to the market maker system 230a (step S61).

In addition, the trade request processing unit 142 generates order information 311 for placing a buy order at the gross price and order information 312 for placing a buy order at the net price. The trade request processing unit 142 sends order request information including the generated order information 311 and order request information including the generated order information 312 to the securities company system 240 corresponding to the investor 21 (step S62). In this case, steps S61 and S62 may be executed in reverse order.

The agency trading unit 241 of the securities company system 240 generates order information 311a for placing the buy order at the gross price, on the basis of the received order request information. The agency trading unit 241 sends the generated order information 311a to the proprietary trading unit 242 to request the placement of the order (step S63) . The proprietary trading unit 242 sends the received order information 311a to the securities exchange system 260 to place the order (step S64).

On the other hand, the securities company system 250 generates order information 313a for placing the sell order at the gross price, on the basis of the order request information sent at step S61, and sends the generated order information 313a to the securities exchange system 260. The securities exchange system 260 executes the buy and sell orders based on the order information 311a and 313a. When the security is traded, the execution of the trade is reported to the securities company systems 240 and 250. The proprietary trading unit 242 notifies the agency trading unit 241 of the trade result (step S65).

After that, the agency trading unit 241 generates order information 312b for placing a sell order at the net price on the basis of the order request information including the order information 312. The agency trading unit 241 sends the generated order information 312b to the proprietary trading unit 242 to request the placement of the order (step S66) .

In addition, the agency trading unit 241 generates order information 312a for placing the buy order at the net price on the basis of the order request information including the order information 312 (step S67). The agency trading unit 241 sends the generated order information 312a to the securities exchange system 260 to place the order (step S68) . On the other hand, the proprietary trading unit 242 sends the order information 312b received at step S66 to the securities exchange system 260 to place the order (step S69) . As a result, the cross-trade is executed between the agency trading unit 241 and the proprietary trading unit 242, thereby trading the security.

The proprietary trading unit 242 notifies the agency trading unit 241 of the trade result (step S70). The agency trading unit 241 notifies the brokerage system 100 of the trade result (step S71). The trade request processing unit 142 of the brokerage system 100 notifies the investor system 210 of the received trade result via the trading agent system 220 (step S72).

In this connection, at steps S66 to S69, the trade between the agency trading unit 241 and the proprietary trading unit 242 may be executed without using the securities exchange system 260. For example, the trade may be executed using the PTS or on the OTC market.

The second embodiment has described the case where the investor 21 requests a "buy" trade for a security, as an example. Alternatively, the investor 21 is able to request a "sell" trade for the security. In this case, the order information 301 and 301a specifies an order type of "sell", and the order information 302 and 302a specifies an order type of "buy". In addition, the order information 311, 311a, 312, and 312a specifies an order type of "sell", and the order information 312b, 313, and 313a specifies an order type of "buy".

The processing functions of each of the apparatuses and systems (for example, the brokerage system 1, securities company system 2, brokerage system 100, investor system 210, trading agent system 220, market maker systems 230, securities company systems 240 and 250, and securities exchange system 260) described in the above-described embodiments may be implemented by using a computer. In this case, a program is prepared, which describes processes for the functions of an individual apparatus. A computer implements the processing functions by executing the program. The program describing the intended processes may be stored on a computer-readable storage medium. Computer-readable storage media include magnetic storage devices, optical discs, semiconductor memories, and others. Magnetic storage devices include hard disk drives (HDD), magnetic tapes, and others. Optical discs include compact discs (CDs), digital versatile discs (DVDs), Blu-ray discs (BDs, registered trademark), and others.

To distribute the program, portable storage media, such as DVDs and CDs, on which the program is stored, may be put on sale, for example. Alternatively, the program may be stored in a storage device of a server computer and may be transferred from the server computer to other computers over a network.

A computer that is to execute the above program stores in its local storage device the program recorded on a portable storage medium or transferred from the server computer, for example. Then, the computer reads the program from the local storage device and runs the program. The computer may run the program directly from the portable storage medium. Alternatively, the computer may sequentially run the program while receiving the program being transferred from the server computer over a network.

According to one aspect, it becomes possible to request securities trades using prices in net pricing.

## Claims

1. A trading method in a securities trading system including a brokerage system (1) mediating securities trading between an investor (3) and a market maker (4) and a securities company system (2) of a securities company with which the investor has a securities account, the trading method comprising:
sending, by the brokerage system, upon receiving a first trade request requesting a trade of one side from buy and sell sides for a security and specifying a net price calculated as a sum of a gross price provided by the market maker and a commission of the securities company from an investor system of the investor side, first order information (5a, 311) for placing a first order of the one side using the gross price and second order information (5b, 312) for placing a second order of the one side using the net price to the securities company system;
performing, by the securities company system, order processing based on the received first order information; and
generating, by the securities company system, third order information (5c) for placing a third order of another side from the buy and sell sides for the security, using the net price, based on the received second order information, and performing order processing based on the second order information and the third order information.

2. The trading method according to claim 1, further comprising:
sending, by the brokerage system (100), upon receiving a second trade request requesting a trade of the one side and specifying the gross price from the investor system, fourth order information (301) for placing a fourth order of the one side using the gross price to the securities company system; and
performing, by the securities company system (240), order processing based on the received fourth order information.

3. The trading method according to claim 1, wherein the brokerage system (100)
stores the commission in association with the investor and the securities company in a storage unit (130),
receives an input indicating that net pricing is used for a price concerning the security, from the investor system (210),
selects a best quoted price from quoted prices provided by a plurality of market makers (230a to 230c) including the market maker, calculates the net price by adding the commission stored in the storage unit to the selected best quoted price, and displays the net price on a display device of the investor system, and
receives the first trade request based on the displayed net price.

4. The trading method according to claim 1, wherein
the first order information (311) is sent to request a proprietary trading department (24b) of the securities company to handle the first order, the proprietary trading department being configured to conduct trading using own funds of the securities company, and
the second order information (312) is sent to request an agency trading department (24a) of the securities company to handle the second order, the agency trading department being configured to conduct trading using funds entrusted by a customer.

5. The trading method according to claim 1, wherein
the order processing based on the first order information (311) in the securities company system is performed by a proprietary trading department (24b) of the securities company, the proprietary trading department being configured to conduct trading using own funds of the securities company, and
the order processing based on the second order information (312) and the third order information in the securities company system is performed between an agency trading department (24a) of the securities company and the proprietary trading department, the agency trading department being configured to conduct trading using funds entrusted by a customer.

6. A trading brokerage method executed by a computer for mediating securities trading between an investor (3) and a market maker (4), the trading brokerage method comprising:
receiving a first trade request from an investor system of the investor side, the first trade request requesting a trade of one side from buy and sell sides for a security and specifying a net price calculated as a sum of a gross price provided by the market maker and a commission of a securities company with which the investor has a securities account; and
sending first order information (5a, 311) for placing a first order of the one side using the gross price and second order information (5b, 312) for placing a second order of the one side using the net price to a securities company system of the securities company.

7. A trading brokerage program for mediating securities trading between an investor (3) and a market maker (4), wherein the trading brokerage program causes a computer to execute a process comprising:
receiving a first trade request from an investor system of the investor side, the first trade request requesting a trade of one side from buy and sell sides for a security and specifying a net price calculated as a sum of a gross price provided by the market maker and a commission of a securities company with which the investor has a securities account; and
sending first order information (5a, 311) for placing a first order of the one side using the gross price and second order information (5b, 312) for placing a second order of the one side using the net price to a securities company system of the securities company.

## Amended claims

### Amended claims in accordance with Rule 137(2) EPC.

1. A trading method in a securities trading system including a brokerage system (1) mediating securities trading between an investor (3) and a market maker (4) and a securities company system (2) of a securities company with which the investor has a securities account, the trading method comprising:
selecting, by the brokerage system, upon receiving a pricing type indicating that net pricing is used for a price concerning a security, from an investor system (210) of the investor side, a first gross price that indicates a best quoted price from quoted prices provided by a plurality of market makers (230a to 230c) including the market maker, obtaining a commission corresponding to the investor and the securities company from a memory storing commissions in association with one or more investors including the investor and one or more securities companies including the security company, calculating a net price by adding the obtained commission to the first gross price, and displaying the net price on a display device of the investor system;
sending, by the brokerage system, upon receiving a first trade request requesting a trade of one side from buy and sell sides for the security and specifying the net price from the investor system, first order information (5a, 311) for placing a first order of the one side using the first gross price and second order information (5b, 312) for placing a second order of the one side using the net price to the securities company system;
selecting, by the brokerage system, upon receiving a pricing type indicating that gross pricing is used for a price concerning the security, from the investor system (210), a second gross price that indicates a best quoted price from quoted prices provided by the plurality of market makers, and displaying the second gross price on the display device of the investor system;
sending, by the brokerage system, upon receiving a second trade request requesting a trade of the one side and specifying the second gross price from the investor system, fourth order information (301) for placing a fourth order of the one side using the second gross price to the securities company system;
performing, by the securities company system, upon receiving the first order information and the second order information from the brokerage system, order processing based on the received first order information;
generating, by the securities company system, third order information (5c) for placing a third order of another side from the buy and sell sides for the security, using the net price, based on the received second order information, and performing order processing based on the second order information and the third order information; and
performing, by the securities company system, upon receiving the fourth order information from the brokerage system, order processing based on the received fourth order information.

2. The trading method according to claim 1, wherein
the first order information (311) is sent to request a proprietary trading department (24b) of the securities company to handle the first order, the proprietary trading department being configured to conduct trading using own funds of the securities company, and
the second order information (312) is sent to request an agency trading department (24a) of the securities company to handle the second order, the agency trading department being configured to conduct trading using funds entrusted by a customer.

3. The trading method according to claim 1, wherein
the order processing based on the first order information (311) in the securities company system is performed by a proprietary trading department (24b) of the securities company, the proprietary trading department being configured to conduct trading using own funds of the securities company, and
the order processing based on the second order information (312) and the third order information in the securities company system is performed between an agency trading department (24a) of the securities company and the proprietary trading department, the agency trading department being configured to conduct trading using funds entrusted by a customer.

4. A trading brokerage method executed by a computer for mediating securities trading between an investor (3) and a market maker (4), the trading brokerage method comprising:
selecting, upon receiving a pricing type indicating that net pricing is used for a price concerning a security, from an investor system (210) of the investor side, a first gross price that indicates a best quoted price from quoted prices provided by a plurality of market makers (230a to 230c) including the market maker, obtaining a commission corresponding to the investor and a securities company, with which the investor has a securities account, from a memory stores commissions in association with one or more investors including the investor and one or more securities companies including the security company, calculating a net price by adding the obtained commission to the first gross price, and displaying the net price on a display device of the investor system;
sending, upon receiving a first trade request requesting a trade of one side from buy and sell sides for the security and specifying the net price from the investor system, first order information (5a, 311) for placing a first order of the one side using the first gross price and second order information (5b, 312) for placing a second order of the one side using the net price to a securities company system of the securities company;
selecting, upon receiving a pricing type indicating that gross pricing is used for a price concerning the security, from the investor system (210), a second gross price that indicates a best quoted price from quoted prices provided by the plurality of market makers, and displaying the second gross price on the display device of the investor system; and
sending, upon receiving a second trade request requesting a trade of the one side and specifying the second gross price from the investor system, fourth order information (301) for placing a fourth order of the one side using the second gross price to the securities company system.

5. A trading brokerage program for mediating securities trading between an investor (3) and a market maker (4), wherein the trading brokerage program causes a computer to execute a process comprising:
selecting, upon receiving a pricing type indicating that net pricing is used for a price concerning a security, from an investor system (210) of the investor side, a first gross price that indicates a best quoted price from quoted prices provided by a plurality of market makers (230a to 230c) including the market maker, obtaining a commission corresponding to the investor and a securities company, with which the investor has a securities account, from a memory stores commissions in association with one or more investors including the investor and one or more securities companies including the security company, calculating a net price by adding the obtained commission to the first gross price, and displaying the net price on a display device of the investor system;
sending, upon receiving a first trade request requesting a trade of one side from buy and sell sides for the security and specifying the net price from the investor system, first order information (5a, 311) for placing a first order of the one side using the first gross price and second order information (5b, 312) for placing a second order of the one side using the net price to a securities company system of the securities company;
selecting, upon receiving a pricing type indicating that gross pricing is used for a price concerning the security, from the investor system (210), a second gross price that indicates a best quoted price from quoted prices provided by the plurality of market makers (230a to 230c), and displaying the second gross price on the display device of the investor system; and
sending, upon receiving a second trade request requesting a trade of the one side and specifying the second gross price from the investor system, fourth order information (301) for placing a fourth order of the one side using the second gross price to the securities company system.
